# EUROPEAN PATENT APPLICATION

(11) **EP 3 425 589 A1**
(43) Date of publication of application: **09.01.2019**
(21) Application number: 17179320.1
(22) Date of filing: 03.07.2017
(51) Int. Cl.: G06T 7/00, G06T 7/11, G06T 7/136

(54) **METHOD FOR ASSESSING A LIKELIHOOD THAT AN ISCHEMIA IN A BRAIN TISSUE AREA RESULTS IN AN INFARCTION OF THIS BRAIN TISSUE AREA BY IMAGE ANALYSIS**

(71) Applicant: Fiebach, Jochen, 14197 Berlin (DE); Villringer, Kersten, 14195 Berlin (DE); Khalil, Ahmed, 13353 Berlin (DE); Hu, Jiun Yiing, Toronto, ON M2H 3L3 (CA)
(72) Inventor: Fiebach, Jochen, 14197 Berlin (DE); Villringer, Kersten, 14195 Berlin (DE); Khalil, Ahmed, 13353 Berlin (DE); Hu, Jiun Yiing, Toronto, ON M2H 3L3 (CA)
(74) Representative: Maikowski & Ninnemann Patentanwälte Partnerschaft mbB

(57) **Abstract**

The invention relates to a method for assessing a likelihood that an ischemia in a brain tissue area results in an infarction of this brain tissue areas. This method is based on image analysis and comprises, amongst others, the following steps: correcting a brain tissue image for cerebrospinal fluid contributions; identifying connected voxels in the brain tissue image having an intensity exceeding or falling below a preset intensity threshold; grouping connected voxels to objects; assigning each object to at least one vascular territory; and, based on a distance and a size value of the objects, grouping at least two objects to a first brain tissue area having a high likelihood of an infarction as result of a previously occurred abnormal blood flow in this first brain tissue area.

## Description

The present invention relates to a method for assessing a likelihood that an ischemia in a brain tissue area results in an infarction of this brain tissue area according to the preamble of claim 1 as well as to a related computer program product according to the preamble of claim 14.

The most commonly used approach for identifying areas of hypoperfusion on perfusion magnetic resonance (MR) images is visualization and manual delineation by clinicians. This approach is both subjective, making it unsuitable for making clinical decisions based on perfusion-diffusion mismatch [1], and time-consuming, and thus not suitable for large datasets or multi-center studies.

Existing automated tools used for this purpose range from simple thresholding to more complex statistical methods. The former tend to greatly overestimate the true size of perfusion lesions and are highly susceptible to artifacts on perfusion maps [2,3]. Other available tools have been developed for specific perfusion modalities, parameter maps, and quantitative thresholds [4,5]. These tools are often missing crucial steps or the ability to sequentially assess perfusion-diffusion mismatch [6].

In the past, a non-invasive method for assessing brain perfusion that relies on detecting temporal delays in the blood oxygenation level dependent (BOLD) signal has been described [7]. Termed BOLD delay, this method does not require the administration of contrast agent and potentially provides highly relevant information on perfusion-diffusion mismatch [8].

It is an object of the present invention to provide a method that allows an efficient, objective, and modality-independent analysis of brain images such as magnetic resonance (MR) perfusion images.

This object is achieved by a method for assessing a likelihood that an ischemia in a brain tissue area results in an infarction of this brain tissue area, comprising the subsequently explained steps.

In a first step, an image of at least a section of a human or animal brain is provided. Thereby, the image contains data on a parameter (such as a level) of blood flow within brain tissue of the brain. This data is typically reproduced in the form of intensity values in the image. Typically, such an image is recorded prior to carrying out the instantly described method. In an embodiment, the image is taken from a research or clinical database or an image database of a clinical trial.

The image is then corrected for contributions by cerebral spinal fluid (CSF). In doing so, the image is segmented into areas of brain tissue and areas of CSF. A brain tissue image segment and a CSF image segment results. These segments can be virtual segments of one and the same image. This segmentation can be done with the help of a T2-weighted image or an apparent diffusion coefficient (ADC) map of the same brain (section) on which a segmentation into areas of brain tissue and areas of CSF is actually done. The resulting segmentation map is then laid over the image provided in the first step so that the areas of brain tissue and the areas of CSF are visible on this image.

In another method step, at least one intensity threshold that delimits normal from abnormal blood flow (usually a diminished blood flow) is set.

Afterwards, those voxels in the brain tissue image segment that have an intensity exceeding the set intensity threshold or falling below the set intensity threshold are identified. Whether or not a high or a low intensity is indicative for an abnormal blood flow depends on the method used for obtaining the image. To give some examples, a high intensity value is indicative for an abnormal low blood flow and thus for an ischemic event in the brain tissue area of the respective voxel when using a Tmax, BOLD delay or mean transit time (MTT) image. To give further examples, a low intensity value is indicative for an abnormal low blood flow and thus for an ischemic event in the brain tissue area of the respective voxel when using a cerebral blood flow (CBF), cerebral blood volume (CBV) or coefficient of variation (CoV) image.

Since individual voxels are of lower medical importance, only those voxels will be relied upon that are connected to at least one other voxel that also has an intensity exceeding or falling below the set intensity threshold, respectively. Thus, in this method step, one or more clusters of connected voxels having a high intensity value and thus being indicative for an abnormal low blood flow in the respective brain tissue are identified.

The voxels that are connected to each other are subsequently grouped to an object. In doing so, a plurality of object results.

In another method step, the brain tissue image segment is further segmented into different vascular territories. This can be done, in an embodiment, by overlaying the brain tissue image segments with a vascular territory (VT) atlas. Such a VT atlas can, e.g., comprise the following territories: vascular territory of the middle cerebral artery (MCA), vascular territory of the anterior choroidal artery (AChA), vascular territory of the anterior cerebral artery (ACA), and vascular territory of the posterior cerebral artery (PCA). Thereby, these vascular territories are present both on the left and on the right hemisphere of the brain. Thus, the VT atlas can, e.g., comprise eight vascular territories (four on the left hemisphere and four on the right hemisphere of the brain).

In another method step, an anatomical location of each object is identified. For this purpose, at least one of the vascular territories is assigned to each object. This is done based on a co-localization of the respective object with at least one of the vascular territories. Expressed in other words, if an object is located at a site which belongs to a specific vascular territory, this object is assigned to the respective vascular territory.

Afterwards, the distance between a first reference point lying within an already infarcted area of the brain being visible on another image of the brain (such as a diffusion-weighted MR image or an ADC map) and a second reference point lying on a perimeter of one of the objects is determined. This is done for each object being assigned to the same vascular territory as the ischemic area. In doing so, it can be assessed whether or not the individual objects (representing an ischemic event) are located close to a bigger infarcted area or region being visible (without voxel-wise image analysis) on the corresponding (MR) image. The infarcted area(s) in this other image can be identified or delineated as commonly done in the art. The result of the identification of the infarcted area(s) can be easily transferred with the help of an infarction map to the initially provided image.

In another method step, the size of the objects determined. Thereby, it can be assessed whether or not the individual objects are small or big. This information is indicative of a degree of potential damaging of a certain vascular territory or brain region.

In an embodiment, the distance determination and/or the size determination is done for all objects in all vascular territories.

Based on the previously determined distance and the previously determined size at least two objects that are assigned to the same vascular territory are grouped to a first brain tissue area.

This first brain tissue area is an area that has a high likelihood of an infarction as result of the abnormal blood flow in this first brain tissue area. The first brain tissue area does not necessarily need to be a confluent brain tissue area. Rather, it can be an area comprising different brain tissue segments. Since the objects making up the first brain tissue area are allocated to the same vascular territory, the first brain tissue area is necessarily located within one specific vascular territory.

In an embodiment, the previously explained method steps starting from setting at least one intensity threshold being indicative for the abnormal blood flow and grouping at least two objects to a first brain tissue area are repeated at least once with a different intensity threshold so that the whole method can be done in an iterative manner. This possible adjustment of the intensity threshold can be used to finely tune the sensitivity of the method, in particular of the significance of the observed intensity values of individual voxels in the image.

In an embodiment, the method steps that can be repeated according to the preceding explanations are performed for each vascular territory separately. In doing so, it is possible to set different intensity thresholds for different vascular territories.

The individual method steps explained in the preceding and in the following sections do not necessarily need to be performed in the explained order. Rather, as long if a specific method step does not require another specific preceding method step, it can be performed at any time point of the described method. To give an example, the method steps of setting an intensity threshold and identifying voxels having an intensity exceeding this threshold can be done after segmenting the brain tissue image segment into different vascular territories.

The instantly described and claimed method increases the reliability for a risk assessment that an infarction results from a previous ischemic event in a brain tissue area. The tissue outcome is strongly dependent on the treatment effect. Subjects without a hypoperfusion that significantly exceeds already infarcted tissue are "futile candidates" and there is no need to put them on risk of treatment procedures. Since in 2-3 % of all patients that are thrombolytically treated a cerebral hemorrhage occurs as severe side effect, a decision whether or not a thrombolytic treatment is sensible is of high importance. In an aging population with increasing stroke incidence and complex medical conditions (e.g. microbleed positive patients, diabetic patients, colon disease patients, gastric ulcer patients etc.) an even higher risk of cerebral hemorrhage due to a thrombolytic treatment results. Therefore, it is highly desirable to know about the possible risks of a non-appliance of a thrombolytic treatment in comparison to the potential benefit of such a thrombolytic treatment. This risk can be better assessed if the likelihood that a specific brain region will be subject to infarction regardless of a thrombolytic treatment is known. The presently claimed method gives information on this likelihood.

The instantly claimed method is no diagnostic method. Rather, a corresponding diagnosis ("stroke", "ischemic cerebral event") has already been made prior to performing the instantly claimed method. The result of the instantly claimed method does not change any previously made diagnosis. Rather, it assists a physician in decisions to be subsequently made regarding further therapeutic treatment of the respective patient.

The instantly claimed method does not necessitate any surgical interaction with a patient. Rather, the method can also be denoted as method for image analysis. It fully relies on an analysis of an image that has previously been obtained. The whole method can be performed without presence of the patient whose brain is depicted on the image to be analyzed.

The instantly described method is neither a therapeutic method. Rather, the claimed method has no direct therapeutic effect on the patient whose brain is depicted on the analyzed image. The result of the method only gives guidance to a physician or to medical staff for further decisions to be made with respect to the subsequent therapy of the patient.

In an embodiment, the method is performed fully automatic after an image to be analyzed has been provided.

In an embodiment, the animal, whose brain is depicted on the initially provided image, is a mammal, in particular a rodent.

In an embodiment, the initially provided image can also be denoted as dataset representing a combination of images comprising data that has been obtained by different methods or modalities. To give an example, the dataset can comprise an ADC map combined with a perfusion map combined with a T2-weighted template. Furthermore, a dynamic susceptibility contrast magnetic resonance image (DSC-MRI) is an appropriate image or an appropriate part of the dataset.

In an embodiment, the initially provided image contains data obtained by magnetic resonance (MR) perfusion and/or computed tomography (CT) perfusion and/or positron emission tomography (PET) and/or acoustic methods and/or optoacoustic methods such as ultrasonic methods. A particularly appropriate MR perfusion method is the detecting of temporal delays in the blood oxygenation level dependent (BOLD) signal, also known as BOLD delay. A combination of BOLD delay and DSC-MRI is a particular appropriate combination of magnetic resonance methods to be used for generating images that can be analyzed by the instantly claimed method.

In an embodiment, the step of correcting the brain image for CSF contributions is followed by an additional step aiming at correcting for CSF artefacts that can be present in the surroundings of one or both lateral ventricles. In this embodiment, the shape of at least one lateral ventricle is determined from the CSF image segment previously obtained. This shape of the lateral ventricle is then used to remove artefacts in a reproduction (an image) of periventricular brain tissue, in particular of white matter, in the brain tissue image segment. Thus, this optional method step serves for an additional subtraction of CSF-related information still present in the brain tissue image segment after the initial correction for CSF contributions.

In an embodiment, not only a single intensity threshold is set for distinguishing normal blood flow from abnormal blood flow. Rather, in an embodiment, more than one intensity threshold is set, wherein each intensity threshold is associated with a different brain tissue area of the brain tissue image segment. Typically, each set intensity threshold corresponds to a specific vascular territory. Thus, it is possible to define VT-specific intensity thresholds that indicate whether a normal blood flow or an abnormal blood flow is to be assumed for a specific vascular territory.

In an embodiment, two voxels are considered to be connected to each other if they are 6-connected. 6-connected voxels are neighbors to every voxel that touches one of their faces. These pixels are connected along one of the primary axes. Each pixel with coordinates (*x* ± 1, *y, z*), (*x, y* ± 1, *z*), or (*x, y, z* ± 1) is connected to the voxel at (*x, y, z*).

In particular appropriate embodiment, two voxels are considered to be connected to each other if they are 18-connected. 18-connected voxels are neighbors to every voxel that touches one of their faces or edges. These voxels are connected along either one or two of the primary axes. In addition to 6-connected voxels, each voxel with coordinates (*x* ± 1, *y* ± 1, *z*), (*x* ± 1, *y* ∓ 1, *z*), (*x* ± 1, *y, z* ± 1), (*x* ± 1, *y, z* ∓ 1), (*x, y* ± 1, *z* ± 1), or (*x, y* ± 1, *z* ∓ 1) is connected to the voxel at (*x, y, z*).

In another embodiment, two voxels are considered to be connected to each other if they are 26-connected. 26-connected voxels are neighbors to every voxel that touches one of their faces, edges, or corners. These voxels are connected along either one, two, or all three of the primary axes. In addition to 18-connected voxels, each voxel with coordinates (*x* ± 1, *y* ± 1, *z* ± 1), (*x* ± 1, *y* ± 1, *z* ∓ 1), (*x* ± 1, *y* ∓ 1, *z* ± 1), or (*x* ∓ 1, *y* ± 1, *z* ± 1) is connected to the voxel at (*x, y, z*).

In an embodiment, an object is assigned to a specific vascular territory if at least 60 %, in particular at least 65 %, in particular at least 70 %, in particular at least 75 %, in particular at least 80 %, in particular at least 85 %, in particular at least 90 %, in particular at least 95 %, in particular 100 % of the object are located within the respective vascular territory previously defined. An overlap between the object and each vascular territory is calculated by dividing the number of object voxels in a specific vascular territory by the total number of object voxels. If this value is higher than or equal to 0.6, at least 60 % of the object are co-localized with the specific vascular territory so that the corresponding voxels can be assigned to this vascular territory.

If an object is assigned to more than one vascular territory an infarction might be observed in more than one vascular territory. Therefore, these objects are considered, in an embodiment, as watershed objects since they might be indicative for a watershed infarct of the brain tissue.

In an embodiment, the distance between the first reference point and the second reference point is the Euclidean distance between these reference points. Thereby, the first reference point can be, in an embodiment, the centroid of the respective infarcted region. The centroid can be, in an embodiment, defined as the center of mass of the infarcted region. In an embodiment, the perimeter of the respective object is defined by the outer shape of all voxels belonging to the specific object (so-called non-zero voxels) that are connected to at least one voxel not belonging to the object (a so-called zero-value voxel), i.e., a voxel that has an intensity value not exceeding the intensity threshold being relevant for the considered vascular territory.

In an embodiment, the size of the objects is defined as volume that can easily be calculated by counting the number of voxels in the respective object and multiplying this number by the voxel size. Voxels typically have an edge length in the range of 0.8 to 5 mm, in particular of 1 to 4 mm, in particular of 2 to 3 mm, so that a volume of a voxel is approximately in the range of 0.5 µL to 125 µL (in each case with respect to the brain in question). A typical voxel size amounts to 1 * 1 *1 mm. However, the size of the individual voxels can be adjusted to the specific needs of a user. Furthermore, the resolution of the provided brain image may be relevant when defining voxel size.

In an embodiment, an object is disregarded from further evaluation steps if it comprises less than 10 voxels, in particular less than 9, in particular less than 8, in particular less than 7, in particular less than 6, in particular less than 5, in particular less than 4, in particular less than 3 voxels. A typical voxel volume amounts to approximately 10 µL. Thus, if an object is smaller than 5 voxels, it has a volume of approximately 0.05 mL or less. An object of this size (volume) is considered as artefact or clinically insignificant area of hypoperfusion.

In an embodiment, all objects are sorted based on their distance to an adjacent object and on their size. An object being closer to another object is sorted higher. Likewise, bigger objects are sorted higher than smaller objects. Typically, the biggest and closest objects are located within the same vascular territory that has been affected by an ischemic event and that is prone to an infarction. In an embodiment, a network or cluster of at least two closest objects and at least two largest objects forms the first brain tissue area that has a high likelihood of infarction. In an embodiment, the at least 3 closest, in particular at least 4 closest, in particular at least 5 closest, in particular at least 6 closest, in particular at least 7 closest, in particular at least 8 closest, in particular at least 9 closest, in particular at least 10 closest objects are used for forming the first brain tissue area. In another embodiment, the at least 3 largest, at least 4 largest, in particular at least 5 largest, in particular at least 6 largest, in particular at least 7 largest, in particular at least 8 largest, in particular at least 9 largest, in particular at least 10 largest objects are used for forming the first brain tissue area. In an embodiment, the number of closest and the number of largest objects is identical to each other. In an embodiment, the 3 closest and the 3 largest objects are used for forming the first brain tissue area. In another embodiment, only the largest objects are considered when forming the first brain tissue area. This embodiment is in particular appropriate if several scattered or watershed objects (i.e., objects broadly distributed over the whole brain or being located in more than one vascular territory) have been observed. As an example, the 6 largest objects might be used for forming the first brain tissue area, in particular in case of scattered objects or watershed objects.

In an embodiment, all other objects that are assigned to the same vascular territory as the objects of the first brain tissue area form a second brain tissue area. Thereby, this second brain tissue area has a medium likelihood of infarction as result of the previously occurred abnormal blood flow in the second brain tissue area.

In an embodiment, all objects assigned to a different vascular territory than the objects of the first brain tissue area form a third brain tissue area. Thereby, this third brain tissue area has a low likelihood of infarction as result of the abnormal blood flow in this third brain tissue area.

The second brain tissue area and the third brain tissue area need - like the first brain tissue area - not necessarily be a confluent brain tissue area. Rather, they can be segmented into different sub areas.

In an embodiment, a likelihood mask is generated. This likelihood mask shows at least the first brain tissue area. Thereby, the initially provided image can be overlaid with the likelihood mask. Then, it is possible to see areas of a high likelihood (high-risk) of infarction directly in the image of the patient's brain. If additionally a second brain tissue area (medium likelihood area) and/or a third brain tissue area (low likelihood area) has been defined, these brain tissue areas can also be included into an according likelihood mask. Then, it is particularly simple for a physician or for medical staff to get an overview over the risk that an infarction results in specific brain areas or vascular territories of the patient's brain due to the previously occurred ischemic event in the brain.

In an embodiment, a report is generated including information on at least one likelihood area, in particular by displaying the determined likelihood area(s) on an image of the patient's brain. This report can then be presented to the patient, to a physician and/or to medical staff.

In an aspect, the instant invention relates to a computer program product comprising instructions which, when the program is executed by a computer, cause the computer to carry out the steps b) to j) of claim 1. Optionally, any other method step explained above can be carried out if the program is executed by a computer.

In an aspect, the instant invention relates to a non-transitory storage medium comprising a computer program as defined in the preceding paragraph.

In an aspect, the instant invention relates to a medical method comprising registering an image of at least a section of a human or animal brain, wherein the image contains data on a level of blood flow within brain tissue of the brain as well as steps b) to j) as defined in claim 1.

All embodiments of the explained method for assessing a likelihood that and ischemia in a brain tissue area results in an infarction of this brain tissue area can be combined in any desired way. Furthermore, they can be transferred to any other explained method and/or to the explained computer program (product).

Further details of aspects of the invention will now be explained with reference to exemplary embodiments.

### First exemplary embodiment

The method, which was implemented in MATLAB R2015a and Linux, automated detection of perfusion lesions in BOLD delay and dynamic susceptibility contrast (DSC) MRI maps. The method is composed of four main steps: (1) data preparation and clean-up of perfusion maps (2) ischemia localization and classification, (3) identification of potential hypoperfusion objects, and (4) object sorting into high, medium and low-likelihood masks.

### (1) Data preparation and clean-up of perfusion maps

In the initial data preparation step, an apparent diffusion coefficient (ADC) map or T2-weighted image was segmented into brain tissue and CSF. The perfusion maps were then registered to the individual subject's DWI space and subsequently to a custom echo planar imaging (EPI) template created from the resting-state scans of 103 stroke patients. A lateral ventricle template was used to extract the individual subject's lateral ventricle from the CSF mask and expand it to remove artifacts in the periventricular white matter. Several quantitative thresholds were then be applied to these "cleaned maps" (e.g. Tmax >2s, BOLD delay > 2.3s, etc.).

### (2) Ischemia localization and classification

The method took as inputs delineated diffusion weighted image (DWI) lesions and overlaid them on a custom, ready-to-use vascular territory (VT) atlas to determine the unique VTs covered by each subject's lesion(s). The atlas consisted of voxels assigned integer values of 1 to 8 for each supratentorial vascular territory (MCA, AChA, ACA, PCA) on the left and right hemispheres. Distinct ischemic regions were identified using the MATLAB function *bwlabeln* as 18-connected neighborhoods, and their volumes and centroids were calculated and recorded into a table for later use.

These ischemic regions were reviewed to determine to which vascular territory or territories they most likely belong. The method achieved this by calculating the total percent of each ischemic region (number of voxels of the total ischemic volume) that existed in each of the unique vascular territories previously identified for that subject. If ≥ 70 % of an ischemic volume existed in a single vascular territory, that VT was considered dominant and the subsequent search for hypoperfusion objects related to that ischemic event was done in that one VT. If an ischemic volume was spread over several VTs with no single VT overlap exceeding 70%, the ischemic event was classified as a "watershed" ischemic event. This was not meant in the radiological sense of the term "watershed ischemic event". Rather, this classification was only used internally to recognize which ischemic events required multiple VTs to be searched for relevant perfusion lesions.

The method then looped through each unique vascular territory (covered by any of the ischemic events) and determined which VT contained multiple ischemic regions. Ischemic regions dominant in these VTs (i.e. not including watershed) were then classified as scattered ischemic regions; the remaining ischemic regions remained as single ischemic regions dominantly occupying one VT.

### (3) Identification and sorting potential hypoperfusion objects

Perfusion map(s) were then imported to identify "objects" (18-connected neighborhoods). Object identification was done systematically in each vascular territory to identify likely perfusion lesions. For watershed ischemic events and non-scattered ischemic regions, potential hypoperfusion objects were limited to those that overlapped with the VT of the ischemic regions only, as it is unlikely for an ischemic event in one VT to cause a perfusion deficit in an unrelated VT or opposite hemisphere. If no hypoperfusion objects were found in the specified VT(s), no likelihood masks were generated for the subject's likelihood of a brain tissue infarct.

For each hypoperfusion object, the distance between the centroid of the ischemic region and the object's closest edge is calculated and sorted by decreasing proximity. Each object is also sorted separately by increasing size, as perfusion lesions tend to be relatively large and relatively close to and often overlapping with the ischemic area. Objects smaller than 5 voxels in size (0.04 mL) were disregarded as artifacts or clinically insignificant areas of hypoperfusion. The union of the top 3 largest and 3 closest objects within the VTs of interest (minimum of 1, maximum of 6 total different objects) were considered high-likelihood areas of hypoperfusion that might lead to an infarct. Objects in the same VTs that did not meet these criteria were saved into a medium-likelihood mask, and objects beyond these VTs within the same hemisphere were saved in low-likelihood masks. Scattered ischemic regions were processed in a similar manner, but proximity was not considered in generating high-likelihood masks so that the 6 objects having the largest volumes were considered to be a high-likelihood area.

This method has the following properties:
1. This method provides an automated perfusion lesion identification solution that utilizes data acquired from a standard stroke MR protocol. For example, CSF removal, which is a crucial step, is done using a mask generated from the ADC map. It thus circumvents the need for acquiring extra data (such as a high-resolution T1-weighted anatomical scan).
2. The method takes into account different ischemic patterns (ischemic event on the border zone of more than one vascular territory and scattered ischemic events).
3. The method can be applied using different quantitative perfusion severity thresholds.
4. The output of the method (high, medium, and low-likelihood masks) allows the results to be scrutinized in retrospect.
5. The method can be applied to different perfusion MR modalities (e.g., DSC and BOLD delay) and perfusion parameter maps (time-to-maximum, mean transit time, etc).

### Second exemplary embodiment

The following exemplary embodiment describes a "perfusion lesion-finding" strategy used to identify areas of abnormal blood flow on brain perfusion maps by removing artifacts, searching for regions of abnormal blood flow, and sorting these regions according to their likelihood of being true or relevant abnormalities.

### (1) Data preparation

The strategy requires (a) perfusion map(s) (with each voxel containing an intensity value that corresponds to a certain perfusion metric), a diffusion-weighted image (identifying areas of restricted water diffusion, used to identify acute brain ischemia), and an anatomical image (here, we used a T2-weighted echo planar imaging sequence).

Initially, the data was prepared by:
1. Image registration: Placing the perfusion maps, the diffusion-weighted-images, the mask (binary image of connected voxels) corresponding to the diffusion-weighted-imaging lesion (i.e. the acute ischemic event), the anatomical images, in the same common image space. This was done by translating, scaling, rotating, and/or shearing these images (i.e. an affine transformation) to fit into a magnetic resonance imaging template of the brain (created by averaging brain images of 100 stroke patients) using an openly available software program (https://fsl.fmrib.ox.ac.uk/fsl/fslwiki/FLIRT).
2. Artifact removal: Artifacts on the perfusion maps that correspond to the cerebrospinal fluid (CSF; in the ventricles and brain sulci) were removed by defining a "CSF mask". This was done by segmenting the anatomical image into gray matter, white matter, and CSF using an openly available software program (https://fsl.fmrib.ox.ac.uk/fsl/fslwiki/FAST) that uses a hidden Markov random field model and an associated expectation-maximization algorithm. The CSF mask was then subtracted from each of the perfusion maps.
3. Threshold selection: A set of quantitative intensity thresholds was selected by the user - these were used to define "abnormal blood flow" and depend on the type of perfusion map being analyzed.

### (2) Search for areas of abnormal perfusion

An automated search for voxels on perfusion maps whose intensity value exceeded the predefined quantitative thresholds and that were connected to one another was performed. The search was done by scanning all voxels in the image and implementing a union-find procedure (https://www.mathworks.com/help/images/ref/bwlabeln.html). "Connectivity" is defined here as 18-neighborhood connectivity - that is to say, two or more voxels are considered connected if their faces or edges touch. A group of connected voxels is referred to as "objects". The objects were then sorted based on the following criteria:
1. Anatomical location; specifically, the territory as defined by the arterial blood supply of the brain (for example, the region supplied by the right middle cerebral artery is a unique "vascular territory"). As a reference, the method used a custom vascular territory atlas in common space where each vascular territory in the brain has a unique intensity value. The overlap between the object and each vascular territory was calculated (number of object voxels in that specific vascular territory / total number of object voxels).
   a. Objects that shared a vascular territory with the diffusion-weighted-imaging lesion (i.e. the acute ischemic region) were sorted first (i.e. objects with an overlap value >0.7 with the vascular territory of the acute ischemic region).
   b. Objects within other vascular territories were ignored at this stage.
2. The proximity of these objects to the DWI lesion mask was determined. This is defined as the (Euclidean) distance between two reference points, which are (a) the centroid of the DWI lesion mask, defined as its center of mass (https://www.mathworks.com/help/images/ref/regionprops.html), and (b) the perimeter of the object, defined as the set of non-zero voxels within the object that are connected to at least one voxel with zero value (https://www.mathworks.com/help/images/ref/bwperim.html). Objects were sorted from closest to furthest away (from DWI lesion mask).
3. The size of these objects was determined. Size is defined here as volume, calculated by counting the number of voxels in the object (https://www.mathworks.com/help/matlab/ref/histc.html) and multiplying this by the voxel size. Objects were sorted from largest to smallest.

### (3) Probability-based sorting and outputs

The method then created and saved the following images:
1. The union of the top 3 closest and the top 3 largest objects form the "high-probability" image.
2. All other objects (excluding those defined in the preceding paragraph) within the same vascular territory as the acute ischemic region form the "medium-probability" image.
3. All objects in the vascular territories not associated with the acute ischemic region (i.e. excluding those defined in the both preceding paragraphs) form the "low-probability" image.

### (4) Uniqueness of the method

This strategy is unique for several reasons and has been developed with an emphasis on broad usability. The key unique features are:
1. It is able to process any magnetic resonance imaging based perfusion map.
2. Any perfusion threshold(s) defined by the user can be used.
3. Processing is done using data that is routinely available from a standard stroke magnetic resonance imaging protocol. It thus circumvents the need to acquire extra data for the specific purpose of identifying perfusion abnormalities.
4. It uses a vascular territory-based search strategy.
5. The result is not a binary output but images with multiple different likelihoods of being "true" perfusion abnormalities.

All method steps of the exemplary embodiments are to be considered as being disclosed isolated from other method steps of the exemplary embodiments. Thus, it is possible to combine individual method steps of one of the exemplary embodiments with individual method steps of the other exemplary embodiment or with more generic method steps explained in the general part of the description to set up a combined method being encompassed from the instantly claimed method.

### List of references cited in the preceding sections

1. Campbell BC V, Christensen S, Foster SJ, Desmond PM, Parsons MW, Butcher KS, et al. Visual assessment of perfusion-diffusion mismatch is inadequate to select patients for thrombolysis. Cerebrovasc Dis. 2010;29: 592-6. doi:10.1159/000311080
2. Galinovic I, Ostwaldt A-C, Soemmer C, Bros H, Hotter B, Brunecker P, et al. Automated vs manual delineations of regions of interest- a comparison in commercially available perfusion MRI software. BMC Med Imaging. 2012;12: 16. doi:10.1186/1471-2342-12-16
3. Galinovic I, Brunecker P, Ostwaldt A-C, Soemmer C, Hotter B, Fiebach JB. Fully automated postprocessing carries a risk of substantial overestimation of perfusion deficits in acute stroke magnetic resonance imaging. Cerebrovasc Dis. 2011 ;31: 408-413.
4. Mouridsen K, Nagenthiraja K, Jónsdóttir KÝ, Ribe LR, Neumann AB, Hjort N, et al. Acute stroke: automatic perfusion lesion outlining using level sets. Radiology. Radiological Society of North America; 2013;269: 404-12. doi:10.1148/radiol.13121622
5. Straka M, Albers GW, Bammer R. Real-time diffusion-perfusion mismatch analysis in acute stroke. J Magn Reson Imaging. 2010;32: 1024-37. doi:10.1002/jmri.22338
6. Galinovic I, Ostwaldt A-C, Soemmer C, Bros H, Hotter B, Brunecker P, et al. Search for a map and threshold in perfusion MRI to accurately predict tissue fate: a protocol for assessing lesion growth in patients with persistent vessel occlusion. Cerebrovasc Dis. Karger Publishers; 2011;32: 186-93. doi:10.1159/000328663
7. Lv Y, Margulies DS, Cameron Craddock R, Long X, Winter B, Gierhake D, et al. Identifying the perfusion deficit in acute stroke with resting-state functional magnetic resonance imaging. Ann Neurol. 2013;73: 136-140.
8. Khalil A Oswaldt AC, Nierhaus T, Audebert HJ, Villringer K, Villringer A, Fiebach J. Diagnostic and volumetric agreement between BOLD signal delay and bolus-tracking MRI on perfusion deficits in acute ischaemic stroke. European Stroke Organisation Conference. Glasgow; 2015.

## Claims

1. Method for assessing a likelihood that an ischemia in a brain tissue area results in an infarction of this brain tissue area, comprising the following steps:
a) providing an image of at least a section of a human or animal brain, wherein the image contains data on a parameter of blood flow within brain tissue of the brain;
b) segmenting the image into areas of brain tissue and areas of cerebrospinal fluid to obtain a brain tissue image segment and a cerebrospinal fluid image segment;
c) setting at least one intensity threshold delimiting a normal blood flow from an abnormal blood flow;
d) identifying voxels in the brain tissue image segment
d1) that have an intensity exceeding the set intensity threshold, if an intensity higher than the intensity threshold is indicative for an abnormal blood flow, and that are connected to at least one other voxel also having an intensity exceeding the set intensity threshold; or
d2) that have an intensity falling below the set intensity threshold, if an intensity lower than the intensity threshold is indicative for an abnormal blood flow, and that are connected to at least one other voxel also having an intensity falling below the set intensity threshold;
e) grouping voxels connected to each other to an object in order to obtain a plurality of objects;
f) segmenting the brain tissue image segment into different vascular territories;
g) assigning each object to at least one of the vascular territories based on a co-localization of the respective object with at least one of the vascular territories;
h) determining a distance between a first reference point lying within an infarcted area of the brain being visible on another imageof the brain and a second reference point lying on a perimeter of one of the objects for each object being assigned to the same vascular territory as the ischemic area;
i) determining a size of the objects;
j) based on the distance and the size determined in steps h) and i), grouping at least two objects that are assigned to the same vascular territory to a first brain tissue area having a high likelihood of an infarction as result of the abnormal blood flow in this first brain tissue area.

2. Method according to claim 1, **characterized in that** the image provided in step a) is a dataset comprising data obtained by different methods.

3. Method according to claim 1 or 2, **characterized in that** the image provided in step a) contains data obtained by at least one method chosen from the group consisting of magnetic resonance perfusion, computed tomography perfusion, positron emission tomography, acoustic methods, and optoacoustic methods.

4. Method according to any of the preceding claims, **characterized in that** a shape of at least one lateral ventricle is determined from the cerebrospinal fluid image segment obtained in step b), wherein the shape of the lateral ventricle is used to remove artifacts in a reproduction of periventricular brain tissue that forms part of the brain tissue image segment.

5. Method according to any of the preceding claims, **characterized in that** more than one intensity threshold is set in step c), wherein each intensity threshold is associated with a different brain tissue area of the brain tissue image segment.

6. Method according to any of the preceding claims, **characterized in that** in step d) two voxels are considered to be connected to each other if they are 18-connected.

7. Method according to any of the preceding claims, **characterized in that** an object is assigned to a specific vascular territory in step g), if at least 60 % of the object are located within the respective vascular territory.

8. Method according to any of the preceding claims, **characterized in that** the first reference points lies within a centroid of the infarcted area.

9. Method according to any of the preceding claims, **characterized in that** an object is disregarded in further method steps if it comprises less than 10 voxels.

10. Method according to any of the preceding claims, **characterized in that** the grouping in step j) is done such that a network of at least two objects being closest to the first reference point and at least two largest objects forms the first brain tissue area having a high likelihood of an infarction.

11. Method according to any of the preceding claims, **characterized in that** all other objects assigned to the same vascular territory as the objects of the first brain tissue area form a second brain tissue area having a medium likelihood of an infarction as result of the abnormal blood flow in this second brain tissue area.

12. Method according to any of the preceding claims, **characterized in that** all objects assigned to a different vascular territory than the objects of the first brain tissue area form a third brain tissue area having a low likelihood of an infarction as result of the abnormal blood flow in this third brain tissue area.

13. Method according to any of the preceding claims, **characterized in that** a likelihood mask is generated showing at least the first brain tissue area, wherein the image provided in step a) is optionally overlaid with this likelihood mask.

14. Computer program product comprising instructions which, when the program is executed by a computer, cause the computer to carry out the steps b) to j) of claim 1 and optionally any steps defined in claims 2 to 13.
